Europäisches Patentamt

European Patent Office  (11) Publication number: **0 393 515**

Office européen des brevets  **A1**

(12) **EUROPEAN PATENT APPLICATION**

(21) Application number: **90107044.1**

(51) Int. Cl.5: **B01D 53/36, B01J 23/86**

(22) Date of filing: **12.04.90**

(30) Priority: **17.04.89 IT 2017289**

(43) Date of publication of application:
**24.10.90 Bulletin 90/43**

(84) Designated Contracting States:
**AT BE CH DE DK ES FR GB GR IT LI NL SE**

(71) Applicant: **S.S.T. SOLID STATE TECHNOLOGIES S.r.L.**
**Via XXV Aprile, 10**
**I-20063 Cernusco Sul Naviglio (Milan)(IT)**

(72) Inventor: **Italiano, Pietro**
**Via Don Mazzolari, 3/A**
**I-20063 Cernusco Sul Naviglio (Milan)(IT)**
Inventor: **Colombo, Bruno**
**Via Carducci 25**
**I-20093 Cologno Monzese (Milan)(IT)**

(74) Representative: **Gervasi, Gemma et al**
**NOTARBARTOLO & GERVASI Srl Viale Bianca Maria 33**
**I-20122 Milan(IT)**

(54) **Plant for purifying air polluted with organic industrial products, by catalytic combustion.**

(57) A plant for purifying air polluted with organic industrial products which originates from industrial processes such as painting, printing and shoe manufacture, comprising a catalyst bed consisting of oxides of metals chosen from the group comprising Cr, Mn, Fe, Co, Ni, Cu, Zn, Sn, Ba, La and Ce, through which the air is passed to obtain low-temperature combustion of said pollutants.

The polluted gaseous stream can also originate from a pollutant accumulation vessel (in the form for example of a filter comprising ceramic absorbents or activated carbon) from which it is released under programmed conditions, and with automatic regeneration of the accumulation vessel.

# PLANT FOR PURIFYING AIR POLLUTED WITH ORGANIC INDUSTRIAL PRODUCTS, BY CATALYTIC COMBUSTION

## Field of the invention

This invention relates to a plant for purifying air polluted with organic industrial products orginating from industrial processes.

## Prior art

Air originating from processes such as painting, printing, shoe manufacture etc. is known to contain pollutant organic substances which are sometimes present in traces (values of ppm) and sometimes in considerable quantities of the order of a cêrtain percentage (same units per cent). However the concentration of such substances never reaches the lower explosive limit.

In the known art such air is treated by filters (for example containing activated carbon) which retain the pollutants within their porous structure, or by reaction with other substances (for example by desulphurization with lime), or by dilution in liquids (as water).

Considered individually, these types of treatment have various drawbacks such as a reduction in efficiency when the absorbent structure is saturated, high cost and problems deriving from the disposal of the spent substances.

## Summary of the invention

We have now found that the problems of the known art can be overcome by the plant for purifying air polluted with organic industrial products orginating from industrial processes according to the present invention, which is characterised by comprising a catalyst bed consisting of oxides of metals chosen from the group comprising Cr, Mn, Fe, Co, Ni, Cu, Zn, Sn, Ba, La and Ce, through which the air is passed to obtain lowtemperature combustion of said pollutants.

The purified air has a pollutants content of much less than the acceptable limits for its emission to atmosphere.

## Detailed description of the invention

The characteristics and advantages of the plant according to the present invention will be more apparent from the following detailed description.

The purpose of said plant is to purify air polluted with organic products which originates from industrial processes such as painting, printing, shoe manufacture etc.

Such air contains solvents, intermediate combustion and pyrolysis products etc. which are sometimes present in traces and sometimes in quantities of the order of a certain percentage (same units per cent).

The plant comprises a chamber containing a catalyst bed through which the polluted air is passed. The catalyst bed is maintained at a sufficient temperature to trigger the combustion of the pollutants, which are converted to $CO_2$ and water.

Upstream of the catalytic converter the plant can comprise a system for accumulating the pollutants or for absorbing their peaks by means of activated carbon or ceramic adsorbents, they being then released under programmed conditions.

The purified air can then be reused in the process cycle.

The chamber containing the catalyst bed has preferably a diameter of between 200 and 400 mm, the choice being made so as to maintain a uniform temperature profile.

The plant can comprise a plurality of said chambers connected in parallel.

The height of the catalyst bed is preferably between 200 and 300 mm.

Each of said chambers can treat from 500 to 25,000 $m^3/h$ of air. The catalyst consists of oxides of metals chosen from the group comprising Cr, Mn, Fe, Co, Ni, Cu, Zn, Sn, Ba, La and Ce. Said oxides can be either pure or supported, and can be single oxides, mixed oxides or oxide mixtures.

Preferred catalysts are mixtures of Cu oxides and $Cr^{III}$ oxide and Ba oxide, with a Cu:Cr weight ratio of between 1:3 and 3:1.

The catalyst can be in the form of pellets, tablets, or beads, rings with a diameter of between 1 and 20 mm, or canaliculate monoliths of suitable shape, or be supported on ceramic monoliths or on variously assembled metal foils.

These arrangements ensure low air pressure drop through the catalyst bed.

The catalysts have a specific surface of between 1 and 200 $m^2/g$.

They are very active and can accommodate very high specific air feed flow rates, typically of between 2,000 and 100,000 volumes of air per volume of catalyst per hour.

With the catalysts according to the present invention the temperature at which the substances to be burnt begin to react with air is between 200 $^\circ$C and 450 $^\circ$C.

The temperature of the catalyst bed during normal operation is between 200°C and 600°C.

These temperature levels enable normal constructional materials to be used.

Such temperature levels also prevent nitrogen oxides formation during the combustion.

The required temperature for combustion of the pollutants contained in the air flow rate to be treated is maintained either by adjusting the temperature of the inlet air or by heating the bed with an armoured resistance heater element or by insulating the outer walls.

The operational parameters such as the height of the catalyst bed, the type of catalyst, the air flow rate and the operating temperature can be varied according to the type and concentration of the pollutants and their reaction trigger temperature.

The system can be optimized either beforehand in the case of known controllable problems, or by continuously monitoring the outflowing gases in order to quantitatively evaluate the pollutant elimination as process conditions vary.

The treated air has a negligible pollutant content.

By way of non-limiting example, the results are given of a test in which combustion tests were conducted on air mixtures comprising numerous compounds on the EPA (Environmental Protection Agency) list, namely:

xylene, toluene, isobutanol, hexane, isooctane, propanol, methanol, cyclohexanone, benzene, ethyl acetate, isopropyl acetate, butanol, acetone, metylethylketone and dichlorobenzene.

The catalyst used had the following characteristics:
- chemical composition (by weight): Cu = 26%; Cr = 21%; BaO = 11%.
- specific surface: 65 m²/g;
- apparent density: 1.5 g/cm³;
- total pores volume: 0.45 cm³/g;
- mean pores radius: 70 Angstrom;
- pellets size: 3 mm

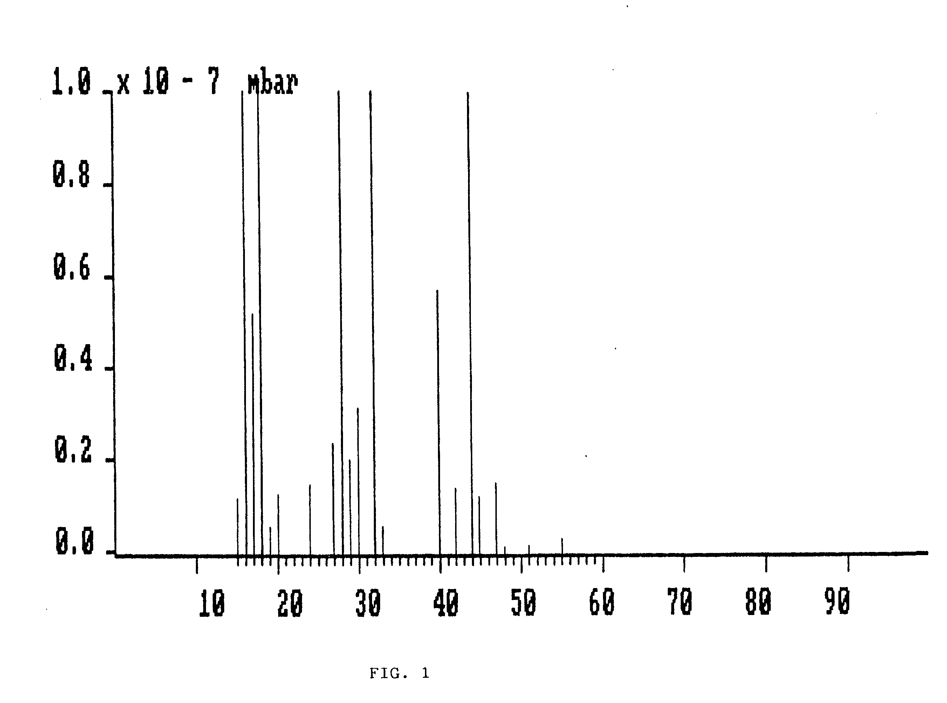

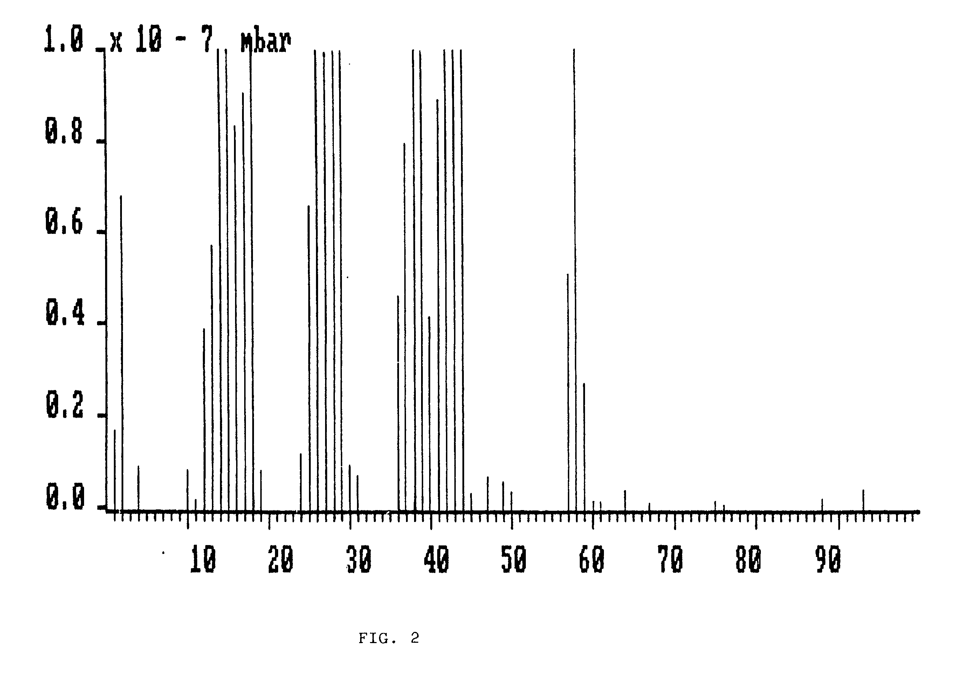

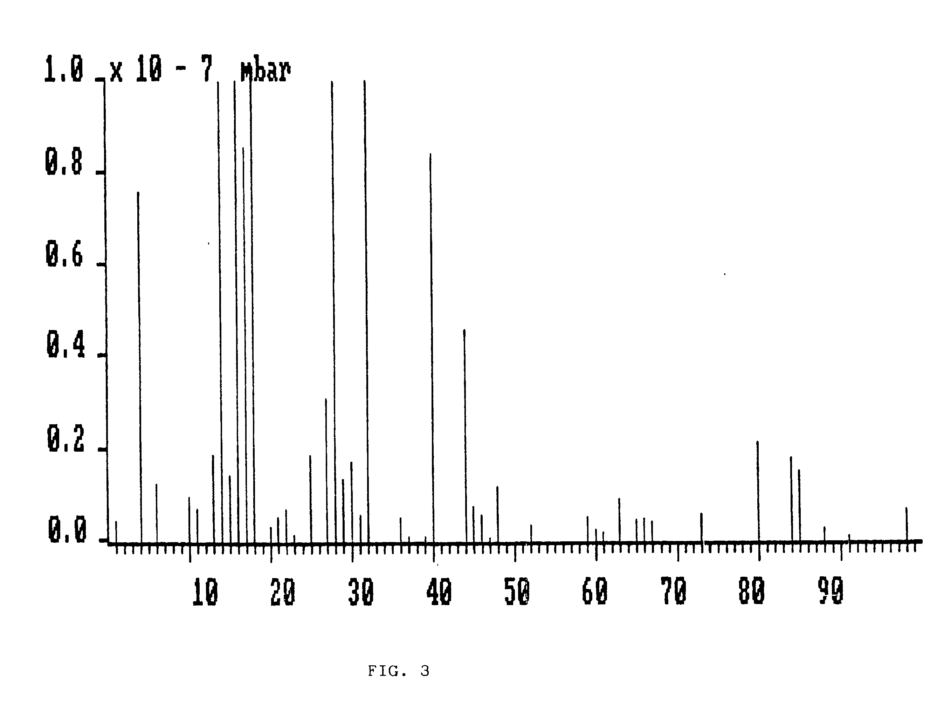

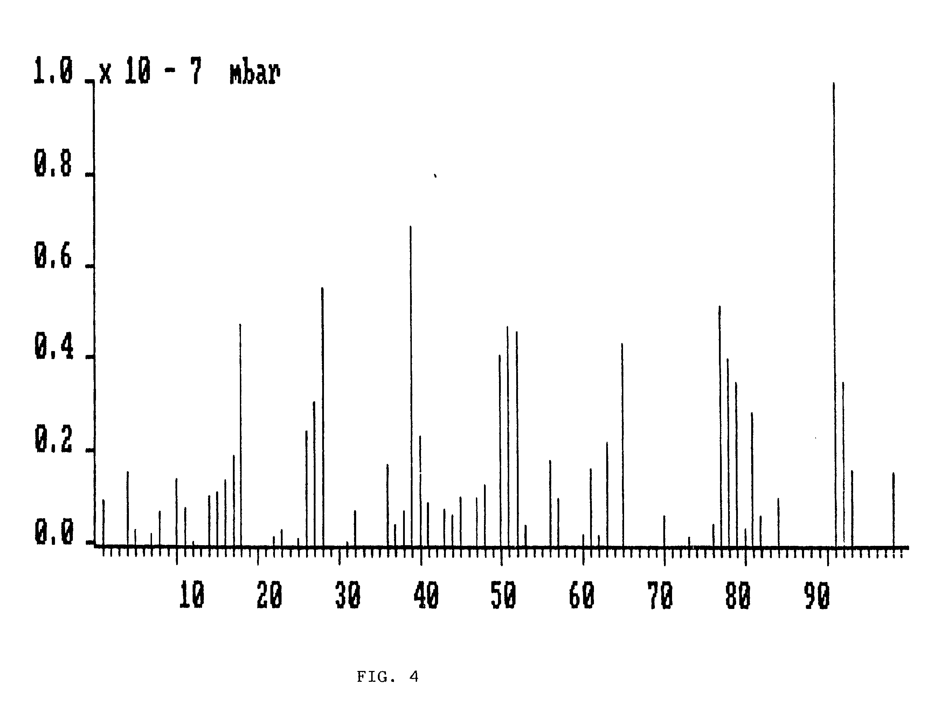

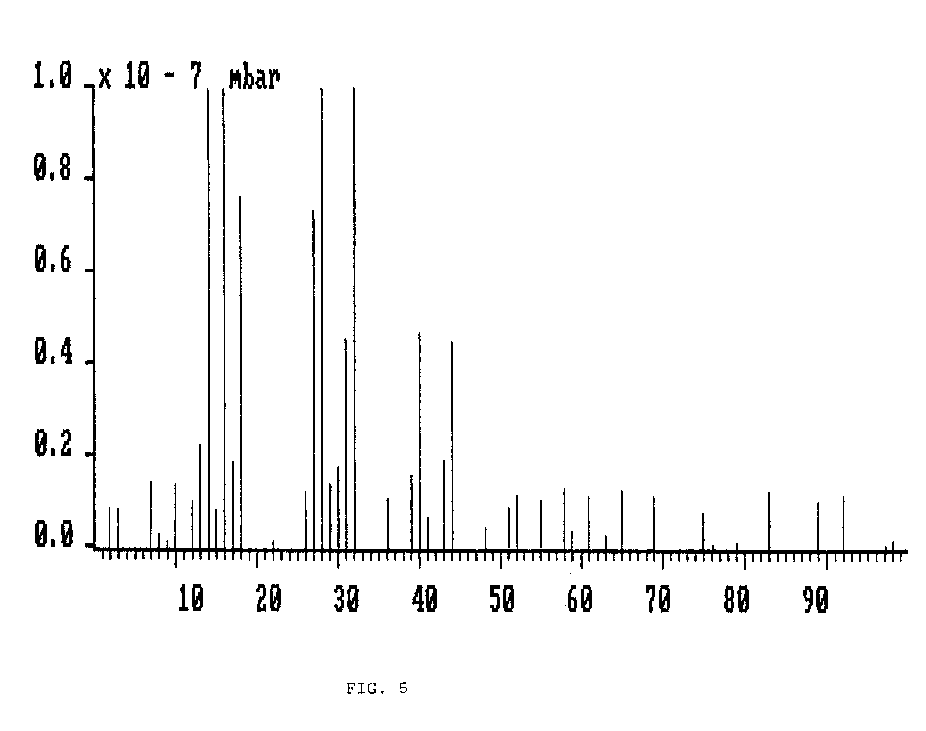

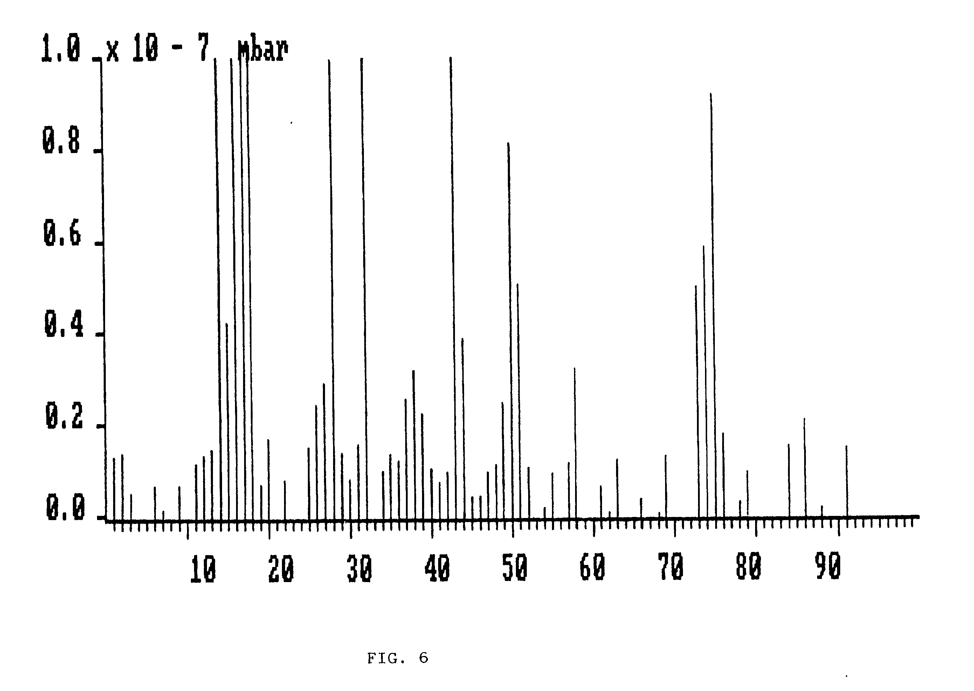

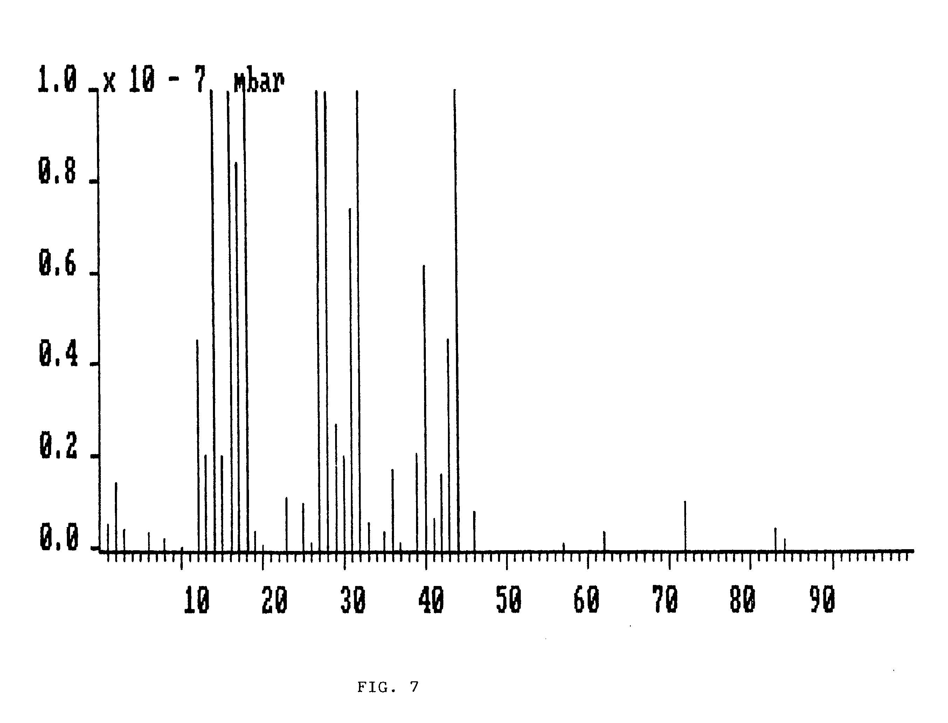

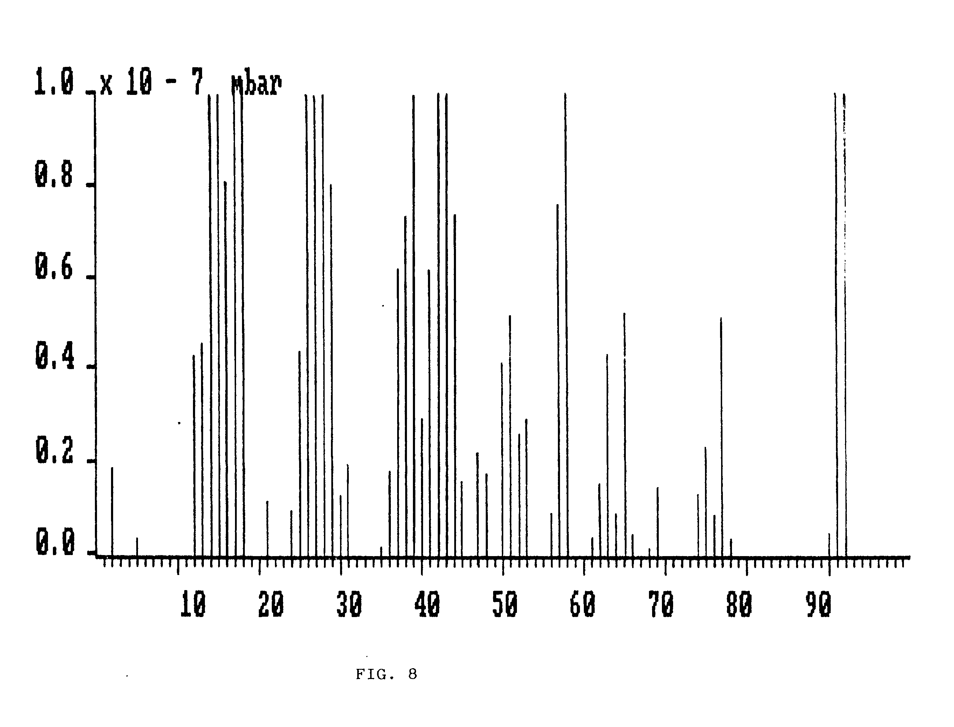

Figures 1 to 8 show the mass spectra obtained during tests on the outflowing gases from the plant. In the diagrams the vertical axis represents the partial pressure of the components in mbar and the horizontal axis represents atomic mass units (a, m, n).

The significance of the various figures is as follows:

Figure 1: acetone + air, treatment at 410°C;

Figure 2: acetone + air, at ambient temperature (comparison);

Figure 3: xylene + air, treatment at 200°C;

Figure 4: xylene + air, at ambient temperature (comparison);

Figure 5: dichlorobenzene + air, treatment at 400°C;

Figure 6: dichlorobenzene + air, at ambient temperature (comparison);

Figure 7: toluene + xylene + acetone + dichlorobenzene + air, treatment at 440°C;

Figure 8: toluene + xylene + acetone + dichlorobenzene + air, at ambient temperature (comparison).

The high efficiency of the plant according to the invention in the combustion of pollutant organic substances contained in air can be seen from an examination of these spectra.

A lengthy trial carried out on a pilot plant has shown that conversion of up to 99.9% can be obtained for mixtures of polychlorobenzene compounds of dioxin and furan type.

## Claims

1. A plant for purifying air polluted with organic industrial products which originates from industrial processes such as painting, printing and shoe manufacture, characterised by comprising a catalyst bed consisting of oxides of metals chosen from the group comprising Cr, Mn, Fe, Co, Ni, Cu, Zn, Sn, Ba, La and Ce, through which the air is passed to obtain low-temperature combustion of said pollutants.

2. A plant as claimed in claim 1, characterised in that the catalyst bed is preferably contained in a chamber of diameter between 200 and 400 mm for treating from 500 to 25,000 m³/h of air.

3. A plant as claimed in claim 1, characterised in that said oxides are either pure or supported.

4. A plant as claimed in claim 1, characterised in that said oxides are either single or mixed oxides, or oxide mixtures.

5. A plant as claimed in claim 1, characterised in that the catalyst bed consists of a mixture of Cu oxides, Cr oxide and Ba oxide, with a Cu:Cr weight ratio of between 1:3 and 3:1.

6. A plant as claimed in claim 1, characterised in that said oxides are in the form of pellets, tablets, beads, rings with a diameter of between 1 and 20 mm.

7. A plant as claimed in claim 1, characterised in that said oxides are in the form of canaliculate monoliths or are supported on ceramic monoliths or on variously assembled metal foils.

8. A plant as claimed in claim 1, characterised in that said oxides have a specific surface of between 1 and 200 m²/g.

9. A plant as claimed in claim 1, characterised in that the temperature of the catalyst bed during normal operation is between 200°C and 600°C.

FIG. 1

FIG. 2

EP 0 393 515 A1

FIG. 3

FIG. 4

1,0 ⎯ x 10 - 7 mbar

0,8 ⎯

0,6 ⎯

0,4 ⎯

0,2 ⎯

0,0 ⎯

10   20   30   40   50   60   70   80   90

FIG. 5

FIG. 6

FIG. 7

EP 0 393 515 A1

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 787 322 (E. KOBERSTEIN) * Claims 15-18; examples * | 1-6,9 | B 01 D 53/36 B 01 J 23/86 |
| X | US-A-3 883 445 (J. ROTH) * Column 18, lines 51-55; table 5 * | 1,3-6,9 | |
| X | GB-A-1 104 562 (DEGUSSA) * Page 1, lines 13-17; examples 1,2; claims 1-3 * | 1,3-6,8 ,9 | |
| X | EP-A-0 211 233 (NIPPON SHOKUBAI KAGAKU KOGYO) * Claims 1-8 * | 1,3,4,7 | |
| X | EP-A-0 246 031 (ATOMIC ENERGY OF CANADA) * Claim 1 * | 1 | |
| X | DE-A-3 636 250 (J. MUSCHAWEK) * Claims 1-5 * | 1,3,4 | |
| X | WO-A-8 603 690 (BERGWERKSVERBAND) * Claims 1-3 * | 1 | TECHNICAL FIELDS SEARCHED (Int. Cl.5) B 01 D B 01 J |

The present search report has been drawn up for all claims

| Place of search | Date of completion of the search | Examiner |
|---|---|---|
| THE HAGUE | 24-07-1990 | KANOLDT W.W. |